# EUROPÄISCHE PATENTSCHRIFT

(11) **EP 2 547 550 B1**
(45) Veröffentlichungstag und Bekanntmachung des Hinweises auf die Patenterteilung: **27.11.2013**
(21) Anmeldenummer: 11715159.7
(22) Anmeldetag: 16.03.2011
(51) Int. Cl.: B60P 7/13

(54) **HORIZONTALVERRIEGELUNGSVORRICHTUNG ZUR VERRIEGELUNG EINES CONTAINERS MIT ECKBESCHLAG AUF EINER LADEFLÄCHE SOWIE VERRIEGELUNGSVERFAHREN DAFÜR**
HORIZONTAL LOCKING DEVICE FOR LOCKING A CONTAINER HAVING A CORNER FITTING ON A LOADING SURFACE AND LOCKING METHOD THEREFOR
DISPOSITIF DE VERROUILLAGE HORIZONTAL POUR VERROUILLER UN CONTENEUR A FERRURE D'ANGLE SUR UNE SURFACE DE CHARGEMENT ET PROCEDE DE VERROUILLAGE ASSOCIE

(30) Priorität: 16.03.2010 DE 202010000387 U
(43) Veröffentlichungstag der Anmeldung: 23.01.2013
(73) Patentinhaber: R.E.A. Patente GmbH & Co. KG, 24814 Sehestedt (DE)
(72) Erfinder: METTERNICH, Heinz-Rüdiger, 21279 Eversen-Heide (DE)
(74) Vertreter: Stüven, Ralf
(86) Internationale Anmeldenummer: PCT/DE2011/075042
(87) Internationale Veröffentlichungsnummer: WO 2011/113430

(56) Entgegenhaltungen:
- EP-A2- 1 800 946
- DE-U1-202006 014 395
- DE-U1-202008 011 526
- US-A- 5 575 599

## Beschreibung

Die Erfindung betrifft eine Verriegelungsvorrichtung zur Verriegelung eines Containers mit Eckbeschlag auf einer Ladefläche, insbesondere für Gooseneck-Auflieger, mit einem Gehäuse, einem in Einbausituation horizontal im Gehäuse verschiebbar geführten Riegelbolzen, der im Entladezustand eingezogen ist und im Transportzustand den Container über eine seitliche Öffnung des Eckbeschlags eingreifend festlegt, und einem Mechanismus zur Betätigung und Sicherung des Riegelbolzens im Transportzustand.

Ferner betrifft die Erfindung ein Verriegelungsverfahren dafür.

Derartige Horizontalverriegelungsvorrichtungen werden insbesondere an sogenannten Gooseneck-Aufliegern an der in Fahrtrichtung vordersten Position verwendet, um Container mit Gooseneck-Tunnel in ihrer vorderen Position vor Abheben und Verrutschen zu sichern. An dieser Position ist nicht genügend Freiraum unterhalb des Containers, um die üblicherweise zur Fixierung von Standardcontainern auf einem Auflieger verwendeten sogenannten "Twistlocks" mit dem dafür erforderlichen Unterbau (Querträger) vorzusehen. Da man jedoch durch Verwendung der Gooseneck-Chassis mit sogenannten High Cube Containern mit Gooseneck-Tunnel etwa 10 bis 14 cm mehr nutzbare Ladehöhe erhält, ohne die international häufig vorgeschriebene Gesamtladehöhe des Sattelzuges von 4 m zu überschreiten, ist dieser erhebliche Aufwand gerechtfertigt.

Um auf derartigen Gooseneck-Aufliegern bzw. Chassis auch Container ohne Gooseneck-Tunnel verladen zu können, sind sogenannte Doppelverriegelungen bekannt, bei denen eine um eine horizontale Achse schwenkbare Konsole so an die Position des Riegelbolzens herunterklappbar ist, dass diese Konsole mit dem Riegelbolzen verrastbar ist und eine erhöhte Auflagefläche für Container ohne Gooseneck-Tunnel bietet. An dieser Konsole ist meist ein herkömmliches Twistlock für die Verriegelung des Containers vorgesehen. Eine derartige Doppelverriegelung ist beispielsweise von der Firma Jost-Werke GmbH, Siemensstraße 2, 63263 Neu-Isenburg, unter der Bezeichnung FB 88-14V bekannt. Ferner ist bei derartigen Doppelverriegelungen die Verwendung einer halbautomatischen Verriegelung für die erhöhte Position von der belgischen Firma Container Quick Lock NV unter der Bezeichnung TQL bekannt. Die darin verwendete halbautomatische Verriegelung ist in der EP 1 937 511 B1 beschrieben.

Aus der DE 200 10 144 U1 ist eine Vorrichtung zur Befestigung eines überlangen Containers auf einem Transportfahrzeug bekannt, bei dem ein- und ausfahrbare Steckzapfen angeordnet sind, die mit Beschlägen mit Aufnahmen für die Steckzapfen zusammenwirken, die Ihrerseits im unteren Stirnseitenbereich des überlangen Containers angeordnet sind. Dabei wird nicht näher angegeben, in welcher Art und Weise die Steckzapfen ein- und ausgefahren werden können, beispielsweise bietet sich im einfachsten Fall ein Hebelmechanismus mit Federvorspannung an.

Aus der EP 1 232 905 A2 ist eine Horizontalverriegelungsvorrichtung gemäß Oberbegriff beschrieben, bei der ein Chassiselement, an dem die Horizontalverriegelung angebracht ist, um eine vertikale Achse zwischen zwei Ausrichtungen schwenkbar gelagert ist.

Die EP 0 878 352 A2 beschreibt eine Verriegelung für Container an einem Gooseneck-Chassis mit einem horizontal verschiebbar gelagerten Steckzapfen und einem im Gehäuse drehbar gelagerten Drehzapfen, wobei Steckzapfen und Drehzapfen getrieblich miteinander gekoppelt sind, so dass bei Betätigung des Drehzapfens auch der Steckzapfen bzw. umgekehrt verschoben wird.

Ferner sind vollautomatische Containerverriegelungen, die von der Gewichtskraft des Containers betätigt werden, in unterschiedlicher Ausgestaltung bekannt. Beispielhaft wird auf die EP 1 800 946 A2, die DE 10 2007 007 067 A1 und die DE 20 2009 016 268 verwiesen.

Nachteilig ist jedoch, dass die erstgenannten Horizontalverriegelungen, insbesondere wie sie für Gooseneck-Auflieger an der vordersten Position des Aufliegers für die Fixierung von Containern mit Gooseneck-Tunneln verwendet werden, manuell verriegelt und manuell gelöst werden müssen. Vor dem Entladen und nach dem Beladen müssen die bekannten Horizontalverriegelungen somit jeweils manuell betätigt werden. Dies ist neben dem Zeitaufwand auch ein erhebliches Gefährdungspotential für den Kraftfahrer.

Aus der US 5,575,599 A ist eine Horizontalverriegelungsvorrichtung zur Verriegelung eines Containers mit Eckbeschlag auf einer Ladefläche bekannt, die ein Gehäuse, ein in Einbausituation horizontal im Gehäuse verschiebbar geführten Riegelbolzen, der im Entladezustand eingezogen ist und im Transportzustand den Container über eine seitliche Öffnung des Eckbeschlags eingreifend festlegt, einen Mechanismus zur Betätigung und Sicherung des Riegelbolzens und eine Federbelastung am Mechanismus aufweist. Diese Verriegelung weist eine Federbelastung in Richtung des Entladezustandes auf und hat keine Verrastung des Riegelbolzens in seinem Transportzustand.

Ausgehend von dieser Verriegelung ist es daher Aufgabe der Erfindung, eine Horizontalverriegelung der genannten Art anzugeben, die automatisiert verriegelt und verrastet und dabei einfach aufgebaut ist.

Gelöst wird diese Aufgabe mit einer Horizontalverriegelungsvorrichtung gemäß Anspruch 1 und einem Verriegelungsverfahren nach Anspruch 7.

Dadurch, dass der Mechanismus halbautomatisch ausgebildet ist, wobei der Riegelbolzen eine Federbelastung in Richtung des Transportzustandes sowie an seinem dem Eckbeschlag zugewandten Ende eine Auflaufschräge aufweist, der Riegelbolzen eine erste Rastposition für den Transportzustand des Riegelbolzens und eine zweite Rastposition für den eingezogenen Entladezustand hat, und ein Tastmittel zur Feststellung des Beladezustandes der Ladefläche vorgesehen ist, wobei zum Entladen der Riegelbolzen manuell in den Entladezustand gebracht und nach dem Entladen der Riegelbolzen vom Tastmittel freigegeben wird, jedoch im Transportzustand erst bei vom Tastmittel festgestellter Beladung verrastet, wird eine automatische Einrastung des Containers beim Beladen ermöglicht. Das neben dem Riegelbolzen angeordnete Tastmittel erlaubt die Feststellung, dass in der Ladeposition ein Container aufliegt. Somit kann für einen Entladevorgang die Horizontalverriegelungsvorrichtung manuell vom Fahrer im Vorwege gelöst, in Offenposition verrastet und nach Abheben des Containers freigegeben werden, damit bei einem erneuten Ladevorgang die Horizontalverriegelungsvorrichtung wieder zur automatischen Verrastung mit dem Containereckbeschlag in ihrer Grundstellung vorliegt.

Wenn das Tastmittel ein am/im Gehäuse nahe dem Riegelbolzen und im Wesentlichen parallel dazu angeordneter, in dieser Richtung verschiebbarer Tastschieber ist, der am aufgeladenen Container federbelastet anliegt und ohne Container vorsteht, wobei am vorstehenden Ende des Tastschiebers eine Auflaufschräge vorgesehen ist, ist das Tastmittel als Tastschieber relativ einfach und mechanisch für den rauhen Alltagseinsatz stabil ausgebildet. Der Container wirkt beim Beladen so auf die Auflaufschräge des Tastschiebers, dass dieser horizontal verschoben wird. Dies erfolgt ebenso mit dem Riegelbolzen, der jedoch bei ordnungsgemäßer Beladung dann federkraftbelastet in die Öffnung des Eckbeschlages eingreift. Demgegenüber liegt der Tastschieber lediglich neben der Öffnung des Eckbeschlages an diesem bzw. an der Containerwandung an. Der Tastschieber bleibt somit in der Position "ein Container ist geladen".

Dadurch, dass das Tastmittel wirkverbunden mit einem Rastmittel ausgebildet ist, wobei das Tastmittel den Riegelbolzen aus seinem eingezogenen Entladezustand durch Freigabe des Rastmittels aus der zweiten Rastposition nach dem Abheben des Containers von der Ladefläche freigibt und die Verriegelungsvorrichtung für eine neue Beladung bereitsteht, beim Aufsetzen eines Containers der Eckbeschlag des Containers den Riegelbolzen mittels Auflaufschräge gegen die Federbelastung eindrückt und bei Erreichen der ordnungsgemäßen Position der Riegelbolzen durch Federbelastung in die Öffnung des Eckbeschlags eingreift und dabei das Rastmittel in die erste Rastposition eingreift, wird eine Sicherung der Horizontalverriegelung gegen unbeabsichtigtes Lösen durch Vorsehen des Rastmittels erreicht. In bevorzugter Ausgestaltung ist das Rastmittel ein in Richtung seiner Einraststellung federbelasteter Stift, der im Wesentlichen senkrecht zur Bewegungsrichtung des Tastschiebers und des Riegelbolzens verschiebbar angeordnet ist, wobei ein zum Riegelbolzen zeigendes Ende des Stifts mit der ersten oder zweiten Rastposition in Eingriff gebracht werden kann und das andere Ende des Stifts mit einem auf dem Tastschieber vorgesehenen Nocken so zusammenwirkt, dass beim Vorschieben des Tastschiebers nach dem Abheben des Containers der Stift aus der zweiten Rastposition mittels des Nockens herausgehoben wird.

Wenn am Gehäuse in Einbausituation oberhalb des Riegelbolzens eine horizontal angeordnete Schwenkachse senkrecht zur Längsachse des Riegelbolzens vorgesehen ist, an der eine Konsole mit einer weiteren Containerverriegelung schwenkbar angelenkt ist, wobei der Riegelbolzen mit der Konsole in ihrer um die Schwenkachse herunter geschwenkten Position wie mit einem Eckbeschlag eines Containers verrastet, wird ein für die flexible Verwendung von Gooseneck-Aufliegern sinnvolle Doppelverriegelung angegeben, bei der für Container mit Gooseneck-Tunnel eine möglichst tiefe Stellpositon mit Verriegelung über die Horizontalverriegelungsvorrichtung bereitsteht, wobei durch Verschwenken der Konsole auch Container ohne Gooseneck-Tunnel in der höheren Ladestellung mit der weiteren Containerverriegelung an der Konsole verrastet werden können. Bevorzugt ist die weitere Containerverriegelung eine vollautomatische Verriegelung ist, wie sie beispielsweise aus der DE 20 2009 016 268 bekannt ist.

Nachfolgend wird die Horizontalverriegelungsvorrichtung anhand eines Ausführungsbeispiels, das in den anliegenden Zeichnungen wiedergegeben ist, detailliert beschrieben.

Darin zeigt:
- Fig. 1: in einer räumlichen Ansicht eine Horizontalverriegelungsvorrichtung, verriegelt mit einem Containerbeschlag,
- Fig. 2 a bis e: in einer teils geschnittenen Draufsicht den Verriegelungs- und Entriegelungsablauf mit Darstellung der wesentlichen Funktionselemente der Horizontalverriegelungsvorrichtung und
- Fig. 3: eine Seitenansicht einer Horizontalverriegelungsvorrichtung mit schwenkbar angelenkter weiterer Containerverriegelung (Doppel-Lock).

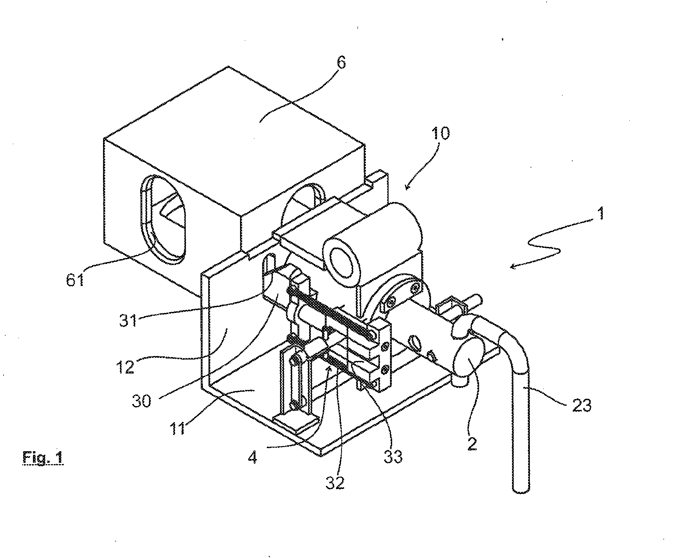

In Fig. 1 ist eine Horizontalverriegelungsvorrichtung in räumlicher Ansicht dargestellt. Die Horizontalverriegelungsvorrichtung 1 weist ein Gehäuse 10 auf, das im hier dargestellten Ausführungsbeispiel zumindest eine Grundplatte 11 und eine Anlagekante 12 hat. In einer zum Gehäuse 10 gehörenden Führung 13 ist ein Riegelbolzen 2 horizontal entlang der Richtung X₁ verschiebbar gelagert.

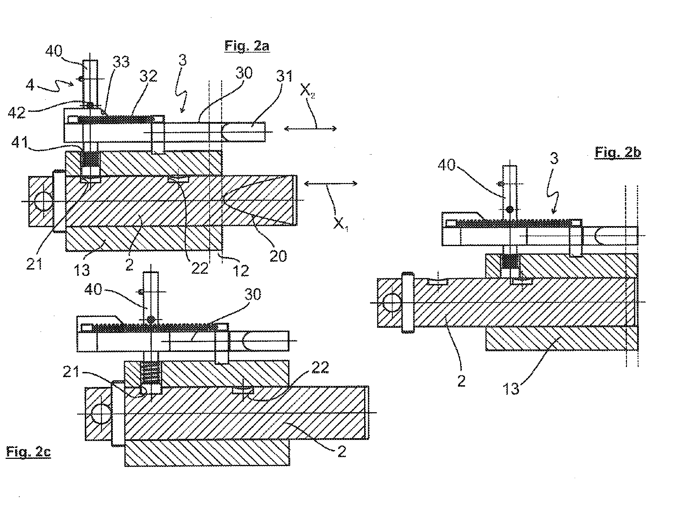

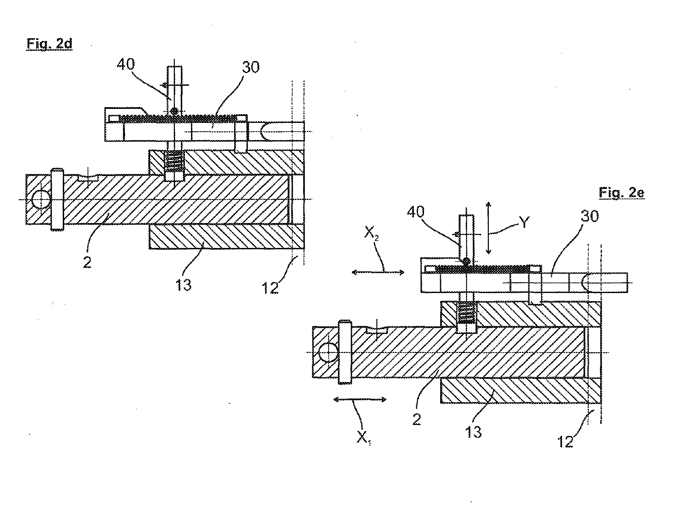

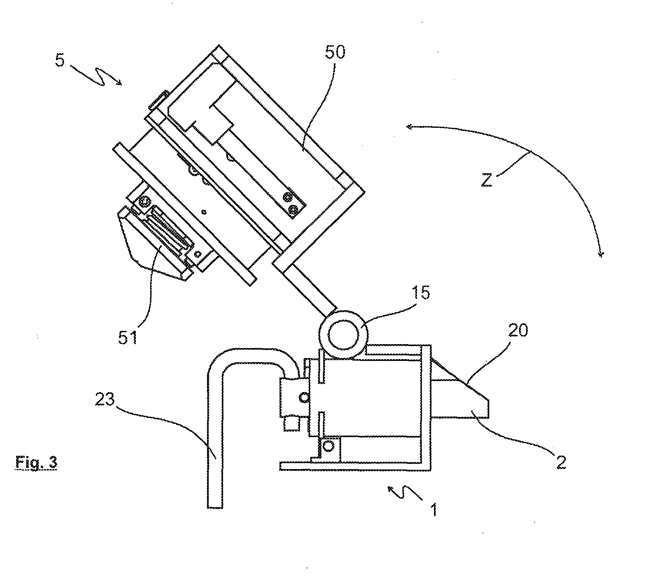

Der Riegelbolzen 2 weist an seinem zur Anlagekante 12 orientierten Ende eine Auflaufschräge 20 auf, die in Fig. 3 in der Seitenansicht und in Fig. 2a bis e im Horizontalquerschnitt lediglich in einem kleinen Anschnitt sichtbar ist. Der Riegelbolzen 2 weist in seiner Zylinderoberfläche zwei Rastpositionen, eine erste Rastposition 21, die im Transportzustand (Fig. 2 c) verriegelt ist, und eine zweite Rastposition 22, die im eingezogenen Entladezustand (Fig. 2 d) verriegelt ist.

Ferner hat der Riegelbolzen 2 an seinem der Auflaufschräge gegenüberliegenden Ende einen Handgriff 23.

Ferner ist parallel zum Riegelbolzen 2 an der Führung 13 eine Lateralführung 14 für ein Tastmittel 3 vorgesehen, das einen Tastschieber 30 aufweist, der ebenfalls in horizontaler Richtung X₂ parallel zum Riegelbolzen 2 verschiebbar in dieser Konsolenführung angeordnet ist. Der Tastschieber 30 weist an seinem zur Anlagenkante 12 orientierten Ende ebenfalls eine Auflaufschräge 31 auf. Der Tastschieber 30 ist über Federn 32 in Richtung seiner vorgezogenen Stellung (siehe Fig. 2 a) federbelastet. Ebenso ist der Riegelbolzen 2 über nicht dargestellte Federn in Richtung seiner in Fig. 2 a dargestellten vorgeschobenen Position federbelastet.

Ferner ist am Tastschieber 30 ein Nocken 33 angeordnet, der mit einem Rastmittel 4 zusammenwirkt. Das Rastmittel 4 besteht aus einem Stift 40, der in der Führung 13 radial zur Längsachse des Riegelbolzens 2 verschiebbar entlang der Radialrichtung Y angeordnet ist. Der Stift 40 ist ebenfalls über eine Feder 41 in Richtung seiner Verrastungsstellung federbelastet. Am Stift 40 ist ferner ein Mitnehmer 42 angeordnet, der mit dem Nocken 33 des Tastmittels 3 zusammenwirkt. Das zum Riegelbolzen 2 zeigende Ende des Stiftes 40 ist so ausgebildet, das es in die Rastpositionen 21, 22 eintauchen kann.

In Fig. 3 ist eine Horizontalverriegelungsvorrichtung dargestellt, die eine am Gehäuse 10 oberhalb des Riegelbolzens 2 angeordnete Schwenkachse 15 aufweist, um die eine Konsole 50 einer weiteren Containerverriegelung 5 in Pfeilrichtung Z schwenkbar angeordnet ist. Die Containerverriegelung 5 weist einen vollautomatischen Verriegelungszapfen 51 auf, wie er beispielsweise im deutschen Gebrauchsmuster 20 2009 016 268 U1 beschrieben ist. In der Konsole 50 ist eine in Fig. 3 nicht dargestellte Öffnung vorgesehen, in die der Riegelbolzen 2 der Horizontalverriegelungsvorrichtung 1 in heruntergeklappter Position der Containerverriegelung 5 einrasten kann. Die in Fig. 3 dargestellte Kombination ergibt somit eine sogenannte Doppelverriegelung, einmal in Form der erfindungsgemäßen Horizontalverriegelung für Gooseneck-Tunnel-Container und das andere Mal für die erhöhte Positionierung von Containern ohne Gooseneck-Tunnel.

Nachfolgend wird das Verriegelungsverfahren mit seiner Funktionsweise anhand der Fig. 2a bis e an der Horizontalverriegelungsvorrichtung 1 beschrieben.

In den Fig. 2a bis e sind in einer teils geschnitteten Aufsicht der Riegel 2 in seiner Führung 13 sowie das parallel dazu angeordnete Tastmittel 3 und ein mit dem Tastmittel 3 zusammenwirkendes Rastmittel 4 dargestellt. Die beiden gestrichelten Linien in den Figuren stellen die Position der Anlagekante 12 dar. Der zu beladende bzw. entladende Container wird mit seinem Eckbeschlag an diese Anlagekante 12 (in der Zeichendarstellung rechts von der Anlagekante 12) angelegt. Diese Situation ist in Fig. 1 räumlich mit dem Containereckbeschlag 6 in der den Container verriegelnden Transportstellung dargestellt.

In Fig. 2 a ist der Grundzustand der Horizontalverriegelungsvorrichtung 1 dargestellt, bei der sich der Riegelbolzen 2 sowie der Tastschieber 30 in ihren federbelasteten vorstehenden Positionen befinden. Bei diesem Grundzustand ist die Horizontalverriegelungsvorrichtung zur Beladung mit einem Container bereit.

Wird nun ein Container mit seinem Eckbeschlag 6 auf dem Auflieger aufgeladen, drückt der Eckbeschlag 6 den Riegelbolzen 2 und den Tastschieber 30 über die beiden Auflaufschrägen 20, 31 gegen die jeweilige Federkraft in das Gehäuse 10 ein, wie es in Fig. 2b dargestellt ist.

Sobald die entsprechend am Containereckbeschlag 6 befindliche Öffnung 61 mit der Position des Riegelbolzens 2 korrespondiert, schnellt dieser federbelastet in die in Fig. 2c dargestellte Position. Dabei verrastet das Rastmittel 4 mit seinem Stift 40, der durch die Feder 41 in Richtung der Raststellung vorbelastet ist in die erste Rastpositon 21 des Riegelbolzens 2 ein. Die Horizontalverriegelungsvorrichtung 1 befindet sich somit in ihrem Transportzustand. Der verladende Container ist über den verriegelten Riegelbolzen 2, der in den Containereckbeschlag 6 eingreift, sicher verankert und vor unerwünschtem Lösen gesichert.

Wenn nun der Container entladen werden soll, ist eine manuelle Betätigung der Horizontalverriegelungsvorrichtung 1 erforderlich. Dazu ist das Rastmittel 4 mit einer Hand zu lösen (in Zeichenebene der Fig. 2d nach oben zu ziehen) und mit der anderen Hand der Riegelbolzen 2 über Handgriff 23 in die in Fig. 2 d dargestellte Position zu ziehen. Dabei lässt der Bediener das Rastmittel 4 wieder los und es verrastet mit der zweiten Rastposition 22, so dass die Horizontalverriegelungsvorrichtung 1 nunmehr im Entladezustand vorliegt.

Wird nun der Container abgehoben, registriert der Tastschieber 30 solange den Kontakt zum Container, bis dieser weit genug angehoben ist. Zunächst rutscht der Tastschieber 30 federbelastet in die in Fig. 2e und dann gleich in die in Fig. 2 a dargestellte Position. Dabei wird über den Nocken 33 des Tastschiebers 3 der Mitnehmer 42 des Rastmittelstifts 40 angehoben, die Verrastung des Rastmittels 4 mit dem in der zweiten Rastposition 22 eingreifenden Stift 40 aufgehoben. Folglich rutscht der Riegelbolzen 2 wieder in die in Fig. 2 a dargestellte Grundstellung, um für eine erneute Beladung bereit zu sein.

### Bezugszeichenliste

- 1: Horizontalverriegelungsvorrichtung
- 10: Gehäuse
- 11: Grundplatte
- 12: Anlagekante
- 13: Führung
- 14: Lateralführung
- 15: Schwenkachse

- 2: Riegelbolzen
- 20: Auflaufschräge
- 21: erste Rastposition
- 22: zweite Rastposition
- 23: Handgriff

- 3: Tastmittel
- 30: Tastschieber
- 31: Auflaufschräge
- 32: Feder
- 33: Nocken

- 4: Rastmittel
- 40: Stift
- 41: Feder
- 42: Mitnehmer

- 5: Containerverriegelung
- 50: Konsole
- 51: vollautomatischer Verriegelungszapfen

- 6: Containereckbeschlag
- 61: Öffnung

- X_{1,2}: horizontale Schieberichtung
- Y: Radialrichtung
- Z: Schwenkbewegung

## Patentansprüche

1. Horizontalverriegelungsvorrichtung (1) zur Verriegelung eines Containers mit Eckbeschlag auf einer Ladefläche, insbesondere für Gooseneck-Auflieger, mit
- einem Gehäuse (10),
- einem in Einbausituation horizontal im Gehäuse (10) verschiebbar geführten Riegelbolzen (2), der im Entladezustand eingezogen ist und im Transportzustand den Container über eine seitliche Öffnung (61) des Eckbeschlags eingreifend festlegt,
- einem Mechanismus zur Betätigung und Sicherung des Riegelbolzens (2) und
- einer Federbelastung am Mechanismus,
**dadurch gekennzeichnet, dass** der Mechanismus halbautomatisch ausgebildet ist, wobei
- der Riegelbolzen (2) die Federbelastung in Richtung des Transportzustandes sowie an seinem dem Eckbeschlag zugewandten Ende eine Auflaufschräge (20) aufweist,
- der Riegelbolzen (2) eine erste Rastposition (21) für den Transportzustand des Riegelbolzens (2) und eine zweite Rastposition (22) für den eingezogenen Entladezustand hat, und
- ein Tastmittel (3) zur Feststellung des Beladezustandes der Ladefläche vorgesehen ist, wobei zum Entladen der Riegelbolzen (2) manuell in den Entladezustand gebracht und nach dem Entladen der Riegelbolzen (2) vom Tastmittel (3) freigegeben wird, jedoch im Transportzustand erst bei vom Tastmittel (3) festgestellter Beladung verrastet.

2. Horizontalverriegelungsvorrichtung (1) nach Anspruch 1, **dadurch gekennzeichnet, dass** das Tastmittel (3) ein am/im Gehäuse nahe dem Riegelbolzen (2) und im Wesentlichen parallel dazu angeordneter, in dieser Richtung verschiebbarer Tastschieber (30) ist, der am aufgeladenen Container federbelastet anliegt und ohne Container vorsteht, wobei am vorstehenden Ende des Tastschiebers (30) eine Auflaufschräge (20) vorgesehen ist.

3. Horizontalverriegelungsvorrichtung (1) nach Anspruch 1 oder 2, **dadurch gekennzeichnet, dass** das Tastmittel (3) wirkverbunden mit einem Rastmittel (4) ausgebildet ist, wobei das Tastmittel (3) den Riegelbolzen (2) aus seinem eingezogenen Entladezustand durch Freigabe des Rastmittels (4) aus der zweiten Rastposition (22) nach dem Abheben des Containers von der Ladefläche freigibt und die Verriegelungsvorrichtung für eine neue Beladung bereitsteht, beim Aufsetzen eines Containers der Eckbeschlag des Containers (6) den Riegelbolzen (2) mittels Auflaufschräge (20) gegen die Federbelastung eindrückt und bei Erreichen der ordnungsgemäßen Position der Riegelbolzen (2) durch Federbelastung in die Öffnung (61) des Eckbeschlags (6) eingreift und dabei das Rastmittel (4) in die erste Rastposition (21) eingreift.

4. Horizontalverriegelungsvorrichtung (1) nach Anspruch 3, **dadurch gekennzeichnet, dass** das Rastmittel (4) ein in Richtung seiner Einraststellung federbelasteter Stift ist, der im Wesentlichen senkrecht zur Bewegungsrichtung des Tastschiebers (30) und des Riegelbolzens (2) verschiebbar angeordnet ist, wobei ein zum Riegelbolzen (2) zeigendes Ende des Stifts mit der ersten (21) oder zweiten Rastposition (22) in Eingriff gebracht werden kann und das andere Ende des Stifts mit einem auf dem Tastschieber (30) vorgesehenen Nocken (33) so zusammenwirkt, dass beim Vorschieben des Tastschiebers (30) nach dem Abheben des Containers der Stift aus der zweiten Rastposition (22) mittels des Nockens (33) herausgehoben wird.

5. Horizontalverriegelungsvorrichtung (1) nach einem der vorhergehenden Ansprüche, **dadurch gekennzeichnet, dass** am Gehäuse in Einbausituation oberhalb des Riegelbolzens (2) eine horizontal angeordnete Schwenkachse (15) senkrecht zur Längsachse des Riegelbolzens (2) vorgesehen ist, an der eine Konsole (50) mit einer weiteren Containerverriegelung (5) schwenkbar angelenkt ist, wobei der Riegelbolzen (2) mit der Konsole (50) in ihrer um die Schwenkachse (15) herunter geschwenkten Position wie mit einem Eckbeschlag eines Containers (6) verrastet.

6. Horizontalverriegelungsvorrichtung (1) nach Anspruch 5, **dadurch gekennzeichnet, dass** die weitere Containerverriegelung (5) eine vollautomatische Verriegelung (51) ist.

7. Verriegelungsverfahren zur Verriegelung eines Containers mit Eckbechlag auf einer Ladefläche, insbesondere für Gooseneck-Auflieger mit einem horizontal verschiebbar geführten Riegelbolzen (2), der im Entladezustand eingezogen ist und im Transportzustand den Container über eine seitliche Öffnung (61) des Eckbeschlags eingreifend festlegt, insbesondere für eine Horizontalverriegelungsvorrichtung gemäß einem der Ansprüche 1 bis 6, **dadurch gekennzeichnet, dass** der Riegelbolzen in Richtung seiner Stellung zum Transportzustand federvorbelastet wird, wobei beim Beladen mit einem Container der Eckbeschlag den Riegelbolzen über die Gewichtskraft des Containers und eine am Riegelbolzen vorgesehene Auflaufschräge in den eingezogenen Zustand zurückschiebt, bei Übereinstimmung der seitlichen Öffnung des Eckbeschlags mit dem Riegelbolzen dieser federbelastet in den Transportzustand gedrängt wird und bei Feststellung des Beladezustandes der Ladefläche eine Sicherung der Riegelbolzenposition im Transportzustand erfolgt.

8. Verriegelungsverfahren nach Anspruch 7, **dadurch gekennzeichnet, dass** zum Entladen der Riegelbolzen manuell oder fernbetätigt unter Freigabe der Sicherung in einen eingezogenen Entladezustand verschoben wird, wonach eine Entladung des Containers von der Ladefläche möglich ist, wobei die Sicherung erst nach Abheben des Containers den Riegelbolzen zum Vorschnellen in seinen federbelasteten, ausgezogenen Zustand freigibt.

## Claims

1. Horizontal locking device (1) for locking a container with a corner fitting on a loading surface, in particular for gooseneck trailers, with
- a housing (10),
- a twistlock (2) horizontally displaceable in the housing (10) in the installed situation, which is retracted in the unloading state, and fixes the container in place during transport by engaging it by way of a lateral opening (61) of the corner fitting,
- a mechanism for activating and securing the twistlock (2), and
- a spring load on the mechanism,
**characterized in that** the mechanism has a semiautomatic design, wherein
- the twistlock (2) exhibits the spring load in the direction of the transport state, as well as an inclined ramp (20) at its end facing the corner fitting,
- the twistlock (2) has a first latching position (21) for the transport state of the twistlock (2), and a second latching position (22) for the retracted state, and
- a touch-sensitive means (3) for determining the loading state of the loading surface, wherein the twistlock (2) is manually moved into the unloading state for unloading purposes, and the twistlock (2) is released via the touch-sensitive means (3) after unloading, but only latched in the transport state after the touch-sensitive means (3) has determined a load.

2. The horizontal locking device (1) according to claim 1, **characterized in that** the touch-sensitive means (3) is a touch-sensitive slider (30) arranged in/on the housing near the twistlock (2) and essentially parallel thereto that can be moved in this direction, which is spring-loaded to abut against the loaded container and protrudes without a container, wherein an inclined ramp (20) is proved at the protruding end of the touch-sensitive slider (30).

3. The horizontal locking device (1) according to claim 1 or 2, **characterized in that** the touch-sensitive means (3) is functionally connected with a latching means (4), wherein the touch-sensitive means (3) releases the twistlock (2) from its retracted unloading state by releasing the latching means (4) from the second latching position (22) after the container has been hoisted off the loading surface, and the locking device is ready for a new load, the corner fitting of the container (6) presses in the twistlock (2) against the spring load via an inclined ramp (20) while positioning a container, and once the proper position has been reached, the twistlock (2) is made to engage into the opening (61) of the corner fitting (6) by the spring load, during which the latching means (4) engages into the first latching position (21).

4. The horizontal locking device (1) according to claim 3, **characterized in that** the latching means (4) is a pin spring-loaded in the direction of its latching position, which is situated so that it can be displaced essentially perpendicular to the direction of movement of the touch-sensitive slider (30) and twistlock (2), wherein an end of the pin pointing toward the twistlock (2) can be engaged with the first (21) or second latching position (22), and the other end of the pin interacts with a cam (33) provided on the touch-sensitive slider (30) in such a way that, as the touch-sensitive slider (30) is pushed forward after hoisting the container, the cam (33) lifts the pin out of the second latching position (22).

5. The horizontal locking device (1) according to one of the preceding claims, **characterized in that** a horizontally arranged pivoting axis (15) is provided on the housing in the installed situation above the twistlock (2) perpendicular to the longitudinal axis of the twistlock (2), to which is pivoted a console (50) with another container lock (5), wherein the twistlock (2) latches with the console (50) when in its position downwardly swivelled around the pivoting axis (15), just as with a corner fitting of a container (6).

6. The horizontal locking device (1) according to claim 5, **characterized in that** the additional container lock (5) is a fully automatic lock (51).

7. A locking method for locking a container with a corner fitting on a loading surface, in particular for gooseneck trailers, with a horizontally displaceable twistlock (2), which is retracted in the unloading state, and fixes the container in place during transport by engaging it by way of a lateral opening (61) of the corner fitting, in particular for a horizontal locking device according to one of claims 1 to 6, **characterized in that** the twistlock is preloaded by a spring in the direction of its position for the transport state, wherein, in the process of loading with a container, the corner fitting pushes the twistlock back into the retracted state via the gravitational force of the container and an inclined ramp provided on the twistlock, forces it under a spring load into the transport state when the lateral opening of the corner fitting coincides with the twistlock, and the twistlock position is secured in the transport state when a loaded state of the loading surface has been determined.

8. The locking method according to claim 7, **characterized in that**, for purposes of unloading, the twistlock is moved into a retracted unloading state by hand or remote control while releasing the safeguard, after which the container can be unloaded from the loading surface, wherein the safeguard only releases the twistlock to advance it in its spring-loaded, extended state after the container has been hoisted.

## Revendications

1. Dispositif de verrouillage horizontal (1) pour verrouiller un conteneur avec une équerre sur une surface de pose, en particulier pour des semi-remorques à col de cygne, comprenant
- un boîtier (10),
- un boulon de verrouillage (2) dirigé mobile horizontalement dans le boîtier (10) en situation de montage qui est rétracté dans l'état de déchargement et fixe le conteneur en le mettant en prise dans l'état de transport, par une ouverture latérale (61) de l'équerre,
- un mécanisme d'actionnement et de fixation du boulon de verrouillage (2) et
- une contrainte par ressort sur le mécanisme,
**caractérisé en ce que** le mécanisme est semi-automatique, sachant que
- le boulon de verrouillage (2) présente la contrainte par ressort dans le sens de l'état de transport ainsi qu'un plan incliné (20) sur son extrémité tournée vers l'équerre,
- le boulon de verrouillage (2) a une première position d'encliquetage (21) pour l'état de transport du boulon de verrouillage (2) et une seconde position d'encliquetage (22) pour l'état de déchargement rétracté, et
- un moyen de palpage (3) pour constater l'état de chargement de la surface de chargement est prévu, sachant que pour décharger, le boulon de verrouillage (2) est amené manuellement dans l'état de déchargement et après le déchargement, le boulon de verrouillage (2) est libéré par le moyen de palpage (3), est toutefois encliqueté dans l'état de transport seulement lorsque le chargement est constaté par le moyen de palpage (3).

2. Dispositif de verrouillage horizontal (1) selon la revendication 1, **caractérisé en ce que** le moyen de palpage (3) est un curseur de palpage (30) disposé sur/dans le boitier à proximité du boulon de verrouillage (2) et parallèlement à celui-ci, mobile dans cette direction, qui repose contraint par ressort sur le conteneur chargé et fait saillie sans conteneur, sachant qu'un plan incliné (20) est prévu sur l'extrémité en saillie du curseur de palpage (30).

3. Dispositif de verrouillage horizontal (1) selon la revendication 1 ou 2, **caractérisé en ce que** le moyen de palpage (3) est formé en liaison active avec un moyen d'encliquetage (4), sachant que le moyen de palpage (3) libère le boulon de verrouillage (2) de son état de déchargement rétracté en libérant le moyen d'encliquetage (4) de la deuxième position d'encliquetage (22) après le levage du conteneur de la surface de chargement et prépare le dispositif de verrouillage pour un nouveau chargement, lors de la pose d'un conteneur, l'équerre du conteneur (6) presse le boulon de verrouillage (2) contre la contrainte par ressort au moyen du plan incliné (20) et lorsque la position correcte est atteinte, le boulon de verrouillage (2) se met en prise dans l'ouverture (61) de l'équerre (6) par contrainte par ressort et met ainsi en prise le moyen d'encliquetage (4) dans la première position d'encliquetage (21).

4. Dispositif de verrouillage horizontal (1) selon la revendication 3, **caractérisé en ce que** le moyen d'encliquetage (4) est une tige contrainte par ressort en direction de sa position d'encliquetage, laquelle est disposée mobile essentiellement à la verticale par rapport au sens de déplacement du curseur de palpage (30) et du boulon de verrouillage (2), sachant qu'une extrémité de la tige orientée vers le boulon de verrouillage (2) peut être mise en prise avec la première (21) ou la seconde position d'encliquetage (22) et l'autre extrémité de la tige coopère avec une came (33) prévue sur le curseur de palpage (30) de telle sorte que lorsque l'on avance le curseur de palpage (30) après le levage du conteneur, la tige est soulevée de la seconde position d'encliquetage (22) via la came (33).

5. Dispositif de verrouillage horizontal (1) selon l'une des revendications précédentes, **caractérisé en ce qu'**un pivot (15) disposé horizontalement sur le boitier dans la situation de montage au-dessus du boulon de verrouillage (2) est prévu verticalement par rapport à l'axe longitudinal du boulon de verrouillage (2), sur lequel est articulée une console (50) comprenant un autre verrouillage de conteneur (5), sachant que le boulon de verrouillage (2) s'enclique avec la console (50) dans sa position basculée vers le bas sur le pivot (15) ainsi qu'avec une équerre d'un conteneur (6).

6. Dispositif de verrouillage horizontal (1) selon la revendication 5, **caractérisé en ce que** l'autre verrouillage de conteneur (5) est un verrouillage entièrement automatique (51).

7. Dispositif de verrouillage pour verrouiller un conteneur avec une équerre sur une surface de chargement, en particulier pour des semi-remorques à col de cygne, comprenant un boulon de verrouillage (2) dirigé mobile horizontalement qui est rétracté dans l'état de déchargement et fixe le conteneur en le mettant en prise pendant l'état de transport par une ouverture latérale (61) de l'équerre, en particulier pour un dispositif de verrouillage horizontal selon l'une des revendications 1 à 6, **caractérisé en ce que** le boulon de verrouillage est précontraint par ressort en direction de sa position pour l'état de transport, sachant que lors du chargement avec un conteneur, l'équerre repousse le boulon de verrouillage via la force due au poids du conteneur et repousse un plan incliné prévu sur le boulon de verrouillage dans la position rétractée, quand l'ouverture latérale de l'équerre correspond avec le boulon de verrouillage, celui-ci est forcé dans l'état de transport en étant contraint par ressort et quand l'état de chargement de la surface de chargement est constaté, la position du boulon de verrouillage est fixée dans l'état de transport.

8. Procédé de verrouillage selon la revendication 7, **caractérisé en ce que** pour décharger, le boulon de verrouillage est poussé dans un état de déchargement rétracté manuellement ou par actionnement à distance en libérant la fixation, après quoi un déchargement du conteneur de la surface de chargement est possible, sachant que la fixation libère le boulon de verrouillage après le levage du conteneur seulement pour le précipiter dans son état sorti contraint par ressort.
